# EUROPEAN PATENT SPECIFICATION

(11) **EP 3 858 026 B1**
(45) Date of publication and mention of the grant of the patent: **16.09.2026**
(21) Application number: 19769833.5
(22) Date of filing: 23.09.2019
(51) Int. Cl.: H04W 72/20, H04W 72/02

(54) **METHOD FOR MANAGING SIDELINK RESOURCES**
VERFAHREN ZUR VERWALTUNG VON SIDELINK-RESSOURCEN
PROCÉDÉ DE GESTION DE RESSOURCES DE LIAISON LATÉRALE

(30) Priority: 26.09.2018 EP 18196999
(43) Date of publication of application: 04.08.2021
(73) Proprietor: Fraunhofer-Gesellschaft zur Förderung der angewandten Forschung e.V., 80686 München (DE)
(72) Inventor: HASSAN HUSSEIN, Khaled Shawky, 91058 Erlangen (DE); ROTH-MANDUTZ, Elke, 91058 Erlangen (DE); BHADAURIA, Shubhangi, 91058 Erlangen (DE); HEYN, Thomas, 91058 Erlangen (DE); LEYH, Martin, 91058 Erlangen (DE)
(74) Representative: Pfitzner, Hannes
(86) International application number: PCT/EP2019/075547
(87) International publication number: WO 2020/064643

(56) References cited:
- EP-A1- 3 300 450
- US-B2- 9 420 564

## Description

The present invention refers to a method for decentralized managing sidelink resources, a first mobile transceiver configured for decentralized managing sidelink resources and to a computer program.

According to the prior art the sidelink resources are controlled based on one of the below principles which are defined for NR (V2X) sidelink communication:
- Mode 1: Base station schedules sidelink resource(s) to be used by UE for sidelink transmission(s).
- Mode 2: UE determines sidelink transmission resource(s) within sidelink resources configured by base station/network or preconfigured sidelink resources. In this case, the base station does not schedule.

An example is known from US 9 420 564 B2.

Starting from these two modes, the resources have to be managed. Therefore, it is an objective to provide a concept for resource managing, especially for sidelink resource managing.

The invention is defined in the appended claims.

An embodiment provides a method for decentralized managing sidelink resources within a communication group. Here, the communication group comprises a first mobile transceiver as a group member and a second mobile transceiver as another group member. The method comprises the central step of exchanging resource control information between the first and the second mobile transceiver. The sidelink control information comprising resource control information comprises at least an information regarding a time slot and/or a frequency slot of the resources.

The resource allocation is performed in a decentralized manner, e.g., when the number of members is known so that the resources are distributed equally. The (required) information is exchanged using resource control information. According to embodiments, the step of exchanging is performed using a dedicated resource portion of the resources or a preconfigured or preassigned dedicated resource portion. Here, each resource control information may comprise an information regarding a group ID assigned to the communication group. According to embodiments, the exchanging may be performed using unicast, group cast or broadcast. According to further embodiments, each group member exchanges resource control information by periodically reporting on resource demand.

According to a further embodiment, the resources used for one normal transceiver, e.g., the first mobile transceiver, can be shared. Thus, according to embodiments, the step of exchanging resource control information can comprise requesting resources by use of a request, wherein the requesting is performed by a further mobile transceiver. Here, the first mobile transceiver can accept the request. According to embodiments, this accepting can be performed by responding an ID of the further (requesting) mobile transceiver (e.g the own group internal member ID or the group internal member ID of the requester).

Alternatively, the accepting can be performed just by not using the requested portion (first portion) so that the further mobile transceiver can directly use the first portion. Of course, the first mobile transceiver is also configured to not accept the request. In such a case, the further mobile transceiver can repeat the request within the communication group or another communication group.

According to embodiments the first mobile transceiver performs a prioritization between different simultaneously transmitted requests of different further mobile transceivers. This prioritization can be performed based on a predetermined priority, on an ID of the further mobile transceivers or based on a QoS information.

Another embodiment provides a first mobile transceiver configured for decentralized managing sidelink resources within a communication group, the communication group comprises a first mobile transceiver as a group member and the second mobile transceiver as another group member. The first mobile transceiver is configured for exchanging resource control information between the first and the second mobile transceiver, wherein the resource control information comprises at least an information regarding a time slot and/or a frequency slot of the resources.

Another embodiment provides a communication group, wherein the communication group comprises a first mobile transceiver as a group member and a second mobile transceiver as another group member. The communication group performs the sidelink resource management based on the method for decentralized managing sidelink resources. Another embodiment provides a computer program for performing one of the above method steps. Embodiments of the present invention will subsequently be discussed referring to the enclosed figures, wherein:
- Fig. 1a: schematically illustrates a communication system within which a centralized approach for managing sidelink resources is illustrated according to a first embodiment;
- Fig. 1b: schematically illustrates a communication network using a data centralized approach for managing sidelink resources according to a second embodiment;
- Fig. 2: schematically illustrates group communication managed by a cluster head, resource allocation for in coverage, out of coverage and group resource handover (cell-handover or zone-handover) according to embodiments;
- Fig. 3: schematically illustrates group communication resource scheduling from gNB (or preconfigured resource) dedicated first to the group/cluster head (GH) according to embodiments;
- Fig. 4: schematically illustrates resources being scheduled in time fashion (TDM) and/or frequency fashion (FDM) from the GM (during the first one or more granted resources by sending SCI-o (similar to dedicated grants in DL, i.e., DClo to group members, GM) according to embodiments. Here, resources can be scheduled fairly according to embodiments or based on the GM QoS value according to embodiments;
- Fig. 5a: schematically illustrates a centralized scheduling according to embodiments;
- Figs. 5b, 5c: schematically illustrate a centralized group cast and a decentralized group cast (all members are equal) according to embodiments;
- Fig. 6: schematically illustrates an approach for control sub-resource pool (sub-resource-pool) to be split among group members, wherein group members may send their status or request resources according to embodiments;
- Fig. 7a: schematically shows period group communication control channel resources assignment that may be configured to the UE (or preconfigured for the UE) as a kind of space according to embodiments;
- Fig. 7b: schematically shows mini-control channel contenting resource assignment according to embodiments;
- Fig. 8a: schematically shows unicast RRC (PC5) sidelink configuration message according to embodiments;
- Fig. 8b: schematically shows group cast RRC (PC5) sidelink configuration message; and
- Fig. 8c: schematically shows group announcement configuration and completion setup according to embodiments.

Below, embodiments of the present invention will subsequently be discussed referring to the enclosed figures, wherein identical reference numerals are provided to objects/structures having identical or similar functions.

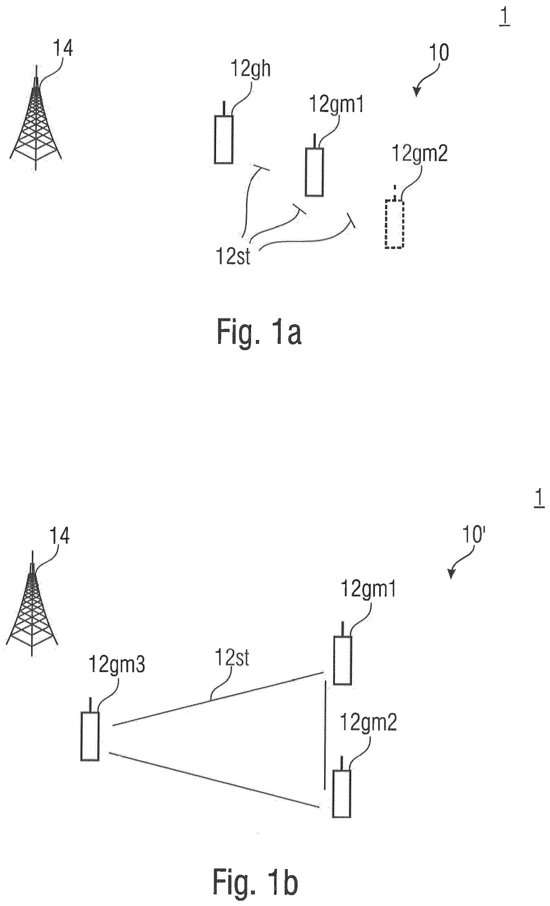

Fig. 1a shows a communication network 1 comprising at least a communication group 10. This communication group comprises at least a first mobile transceiver 12 GH and a second mobile transceiver 12 GM1. As it is optionally illustrated, the group 10 can also comprise further mobile transceivers, e.g., the third mobile transceiver 12 GM2. The communication network 1 can also comprise a base station 14 which, for example, is in a surrounding of the group 10.

The members (group head 12 GH and the group members 12 GM1 and GM2 of the communication group 10) can communicate with each other using sidelink resources, i.e. via a sidelink 12 SL. These sidelink resources can be preconfigured sidelink resources or resources assigned by the network, i.e., the base station 14. In order to distribute the resources to be used within the communication group a centralized non-claimed process is used. Here, the group head 12 GH distributes the sidelink resources 12 SL. Regarding the group 10 it should be mentioned that same can be in coverage or at least partially in coverage of the base station or out of coverage. In case the group 10 is out of coverage, typically preconfigured resources are managed, wherein in the in coverage case, the assigned resources for the group 10 or preconfigured resources can be managed. Note preconfigured resources are, for example, resources that are preconfigured for the UEs to be used, e.g., during out of coverage. Configured resources may be resources configured for a particular UE or a group of UEs. These resources can be autonomous - the UE selects resources among those configured resources - or dedicated - UE transmissions are scheduled on a dedicated resource. Below, the process for managing these resources will be discussed in detail.

The aim is to distribute the available resources for the sidelinks 12 SL. In order to perform this resource management, the group head 12 G performs the distribution continuously. For this it exchanges resource control information between the single members, i.e., at least between the member 12 GH and 12 GM1. This control information can comprise information regarding a time slot to be used or a frequency slot to be used on a generally so-called bandwidth portion. For example, a second portion (bandwidth portion) of the resources is assigned to the second mobile transceiver 12 GM1, such that same can allocate the second portion. In this case, the first portion can, for example, be used by the first mobile transceiver 12 GH.

According to embodiments, preferably a so-called predetermined resource block defined in time and frequency, which is also referred to as bandwidth portion, is indicated within the resource control information, e.g., together with an information which user may use this resource block within which network. This information can be output (group cast, unicast or broadcast) by the group head 12 G.

An exemplary approach is that this process is performed based on a request of the group member 12 GM1 such that the resources can be granted by the group head 12G or, vice versa, can be initiated by offering resources directly. The resource managing is performed dynamically according to preferred embodiments, since the resource requirements as well as the constellation of the group 10 varies over time.

Regarding the group 12G it should be noted that this is one of the transceivers which has, at least, the responsibility for the centralized managing of the resources. When starting from V2V networks, this can, for example, be the so-called platoon head.

Regarding the second group member 12 GM, it should be noted that the sidelink resources which can be used by 12 GM2 are shared in the same manner, i.e., the resources, e.g., the bandwidth portion is granted/assigned by the group head 12 GH for the group member 12 GM2. Note that the number of resources to be shared depends on the number of group members, group members requiring resources.

Fig. 1b shows another way for managing sidelink resources, namely a decentralized approach. This embodiment will be explained when starting from the same configuration, namely a group 10' of a network 1, wherein the group 10' comprises three group members
12 GM1, 12 GM2 and 12 GM3 which may be, as discussed above, in coverage, partially in coverage or out of coverage of the base station 14. The transceivers 12 GM1, 12 GM2 and
12 GM3 can be configured to use sidelink resources for the group communication within the group 10'.

The data centralized approach (not claimed) is based on the principle that at least two transceivers 12 GM1 and 12 GM2 of the group 10' exchange resource control information to each other so that the resources can be distributed. As discussed above, the resources to be distributed are defined by use of time slots and/or frequency slots. The resources can further be defined as bandwidth portions. For example, the bandwidth portions are distributed so that the different resources or resource portions are assigned to the respective members. For example, the member 12 GM1 uses the first portion while the member 12 GM2 uses the second portion. The coordination is performed using the step of exchanging resource control information. Preferably, the resource control information is periodically exchanged and can comprise a group communication status and/or a group communication demand. The group members listen and can react accordingly. For example, a request can be exchanged from one group member, e.g., group member 12 GM2 regarding a first resource portion, wherein the first group member 12 GM1 grants or denies the request in accordance with its current situation. According to further embodiments, a periodization is used for granting the respective resources to another transceiver. Below, further embodiments for the sidelink group resource management for mesh network and V2X networks will be discussed.

The below discussion is made on the assumption that either of the mode 1 (base stations 14 (ENB of NR sidelink or gNB of LTE sidelink resources) schedule sidelink resources 12 SL to be used by the UE for sidelink transmission or sidelink transmissions) or mode 2 (UE determines (i.e., base station does not schedule) sidelink transmission resource/resources within sidelink resources configured by a base station/network or preconfigured sidelink resources) is used.

Mode-2 definition covers potential sidelink radio-layer functionality or resource allocation sub-modes (subject to further refinement including merging of some or all of them) where:
a) UE autonomously selects sidelink resource for transmission
b) UE assists sidelink resource selection for other UE(s)
c) UE is configured with NR configured grant (type-1 like) for sidelink transmission
d) UE schedules sidelink transmissions of other UEs

It is to continue study details of resource allocation modes for NR-V2X sidelink communication. For both modes, the following allocation techniques can be applied.
- Dynamic resource allocation (gNB assisted)
- Activation/deactivation based (gNB assisted/RRC configured)
   E.g., semi-persistent scheduling allocation or NR grant free type-2
- RRC (pre-)configured
   E.g., configured NR grant type-1, UE autonomous selection of resource(s) from resources configured by RRC

There are different level of network control, e.g., whether the UE may select other parameters (e.g., MCS) and/or the exact transmission resources, and whether the selection is autonomous or not

As already discussed above, for the communication group 10 two cases according to two different embodiments are applicable:
For group communication, it is important to consider two cases:
1- When the gNB can schedule resources for one or more groups, whether these resources are dynamic resource allocation (grant-based) or semi-persistent scheduling (SPS) or grant-free type 1 (pre-configured resources type 1) with activation/deactivation
2- When the UEs in the group are not in coverage or the gNB (even though connected to one or more UEs in the group) or the RRC decides on (pre-) configured NR grant type-1, i.e., autonomous selection of resource(s) from resources configured by RRC

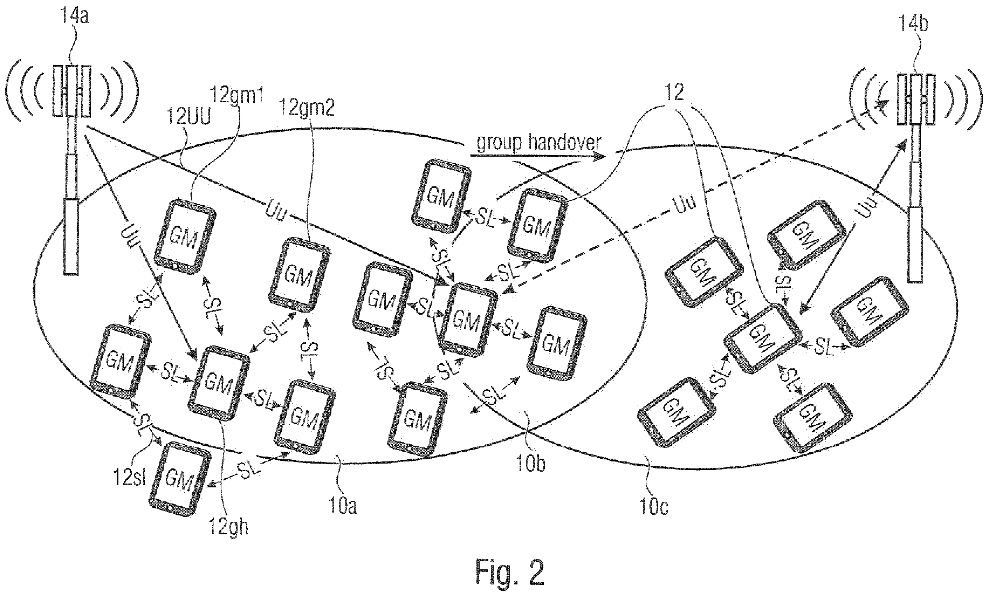

With respect to Fig. 2, some optional features, e.g., to a handover will be discussed.

Fig. 2 shows a communication network 1' having the three communication groups 10a, 10b and 10c. Each group 10a, 10b and 10c consists out of a plurality of group members, exemplarily marked by 12 GM1 and 12 GM2, wherein the resources, especially the sidelink resources 12 SL, are managed by the group head 12 GH. The first group 10a is in coverage of the base station 14a, while the third group 10c is in coverage of the base station 14b.

The group 10b lies in between, such that the same is in coverage of both base stations 14a and 14b. The members 12X/UEs go into groups based on upper layer requirements (e.g., V2X, mesh network, and D2D multi-connected network). Gathering and building up a group happens as well as after the discovery binding and the discovery measurements. According to embodiments, there may exist (per UE) one or more links to other UEs 12x in the respective group 10a, 10b, 10c, including the group head GH/12 GH. The election of the group head 12 GH may be done and taken care by the upper layers, i.e., for example by the base station 14a. All UEs 12X in the group (or some UEs 12X in the group) are RRC connected/idle. Note, it may happen that all UEs in the group (or some UEs in the group) are out of coverage. A group is all in coverage, e.g., group 10a, when the group head GH/12 GH and all group members (GMs/GMs) are connected to RRC. Note, a group is partially connected when the group head GH (12 GH) and some other group members (GM/12 GM), e.g., UEs, are connected while others are not connected or out of coverage.

According to embodiments, a group, here the group 10b which is in coverage of the base station 14 a, can be handed over to the base station 14b. Before the handover, the UEs of the group or especially the group head 12G has an active connection 12 UU to the base station 14a, wherein a better connection is established to the base station 14b. When the group head 12 GH is connected to the base station 14b, the entire group is in the responsibility/coverage of the base station 14b. Consequently, here new resources can be applied to the group 10b which are managed afterwards.

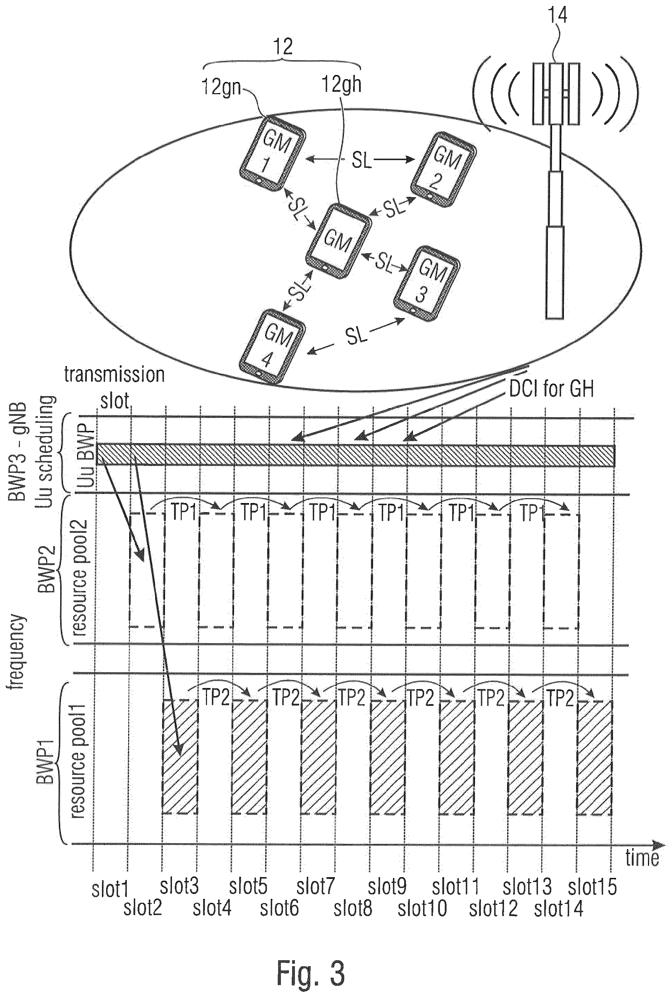

With respect to Fig. 3, the principle of resource sharing will be discussed. Fig. 3 shows a diagram of the frequency portions BWP1, BWP2 and BWP3 over the time. BWP1 and BWP2 are the bandwidth portions to be shared while BWP3 represents the gNB UU scheduling. Within this frequency portion the DCI (downlink control information) for the group head are included as illustrated by the arrows DCI for GH.

The below discussion is made on the assumption that at least the group head is connected to one (or more) base stations where the group head is receiving downlink control information (DCI) including DCI grants for the V3X resource pools schedule. Then the group head receives all the scheduling grants and the scheduled resources for the group (based on a specified modified buffer status report fields/formats or modified scheduling request (SR) message fields/formats). Note, BWP3 is dedicated as a common/specific bandwidth portion for the UU transmission, i.e., the transmission between the base station and at least the group head, wherein DCIs are received. For the group head which should distribute the resources, a plurality of resource pools defines in one or more bandwidth parts (BWPs).
- SPS periodic resources (i.e., multiple configuration 8 or more (depending on the number of available GMs)
- Configured grants assigned by RRC (type 1) or RRC/base-station (type 2) with multiple configurations (also 8 or more than 8)

These resources may be defined as a dedicated resource configuration for a Group of GM UEs. This means that all sensing and resource selection for the meant inter group communication is happening within these resources.

We may also refer to these dedicated group resources as a group resource pool. A group resources may be defined by the BS via L1 signaling, e.g., DCI, or upper layer signaling, e.g., dedicated/group RRC aor System information blocks (SIB) dedicated for the meant sidelink communication.

We may also indicate that these resources may be used by other groups not geographically located with the said group. This means that the group resources may be shared in/within a separated geographical area. In this case:
- The group of UEs or the group lead may perform measurements on the dedicated group resources if requested by gNB/Network.
- The UE may expect to be requested by the gNB to perform:
   ∘ Sensing/CBR measurements on the group resources
   ∘ Send sensing/CBR reports on the group resources

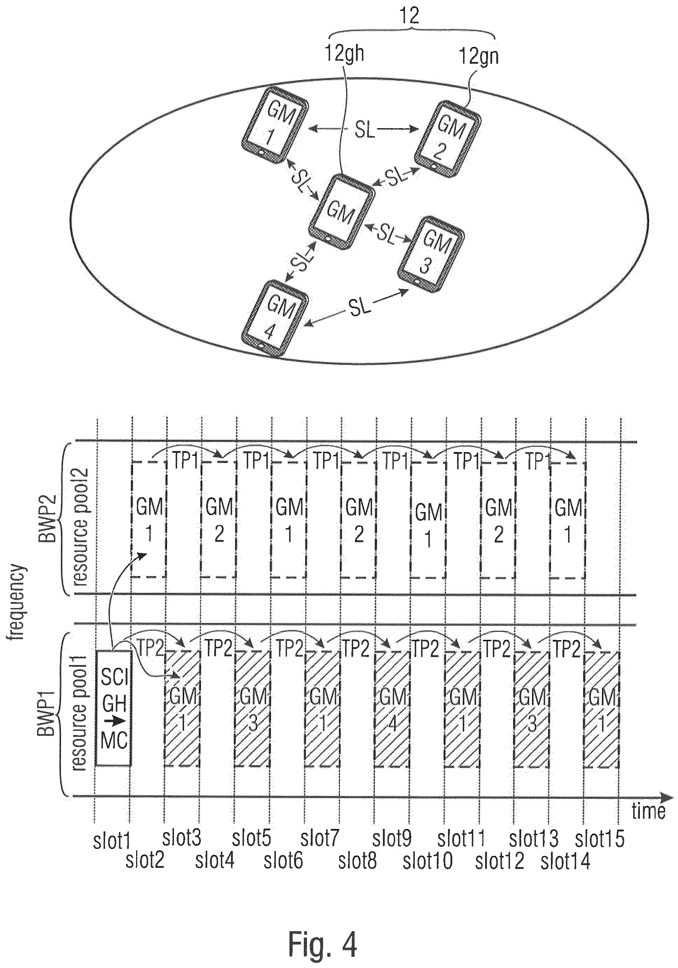

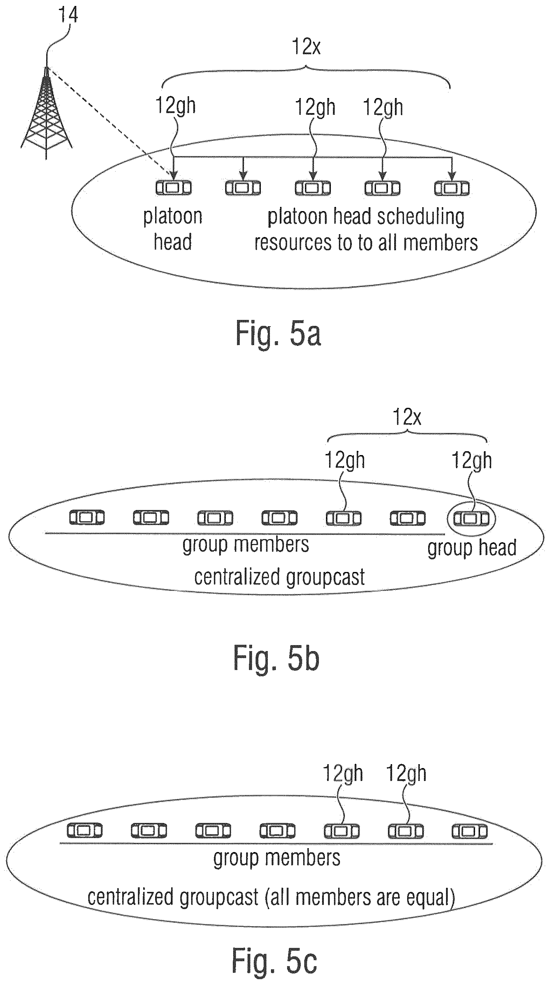

With respect to Fig. 4, one or more shots of dynamic resources will be discussed. Fig. 4 shows a frequency/time diagram comprising the bandwidth portion BWP1 and BWP2. Note, the entire area defined by the BWP1 and BWP2 forms the resource pool. Here, the assumption is made that the base station is either not present or has already preconfigured multiple period resources for the group head. It is the responsibility of the GH to distribute the resources, either in a timed fashion with equality (fairness, e.g., round robin) or based on QoS. Resources are distributed in new SPS/pre-configurations or as been granted by the base-station (same SPS/pre- configurations). GH sends the grants to the GMs via SCI (PSCCH) or PSSCH. The GH distribute and preconfigure all GMs via the controlling messages as in Fig. 5a

Fig. 5a shows a plurality of vehicles 12x comprising a transceiver. The vehicles 12x form a platoon, wherein the platoon head (group head) is marked by the reference numeral 12 GH and the other members for which the platoon head schedules the resources are marked by the reference numeral 12 GM. According to embodiments, a definition of the group head/group leader/group manager (GH/GL) is that same can be used as a kind of a relay, e.g.,;
- The GH represents the Control-plan relay, i.e., relaying control messages.
- The GH represents a relay for the data-plan, i.e., relaying information, which could be a common information among the group. Thus, a GH can, at least, group-cast these information to the entire group.

Below, an example of group cast communication taken place within platoon will be described. This platoon example (vehicle driving along a direction) is just one example out of multiple group communication examples. Another example is a mesh network composed out of transceivers operating in an industrial automation process and forming communication group.

Different variant of a platoon / communication group will be discussed.

A platoon can consist of platoon head and platoon members. The platoon members follow the platoon head at a (pre-) defined or fixed or adapted distance and with a (pre-) defined or fixed or adapted speed (see Fig. 5a and Fig. 5b).

Each group may consist of one or (usually) multiple group members and a group head (GH): Per group there might be one group head taking over some controlling function within the group, i.e. using a centralized group management, Fig. 5b. Within Fig. 5b, the group head is marked by 12 GH, while the others are marked by 12 GM.

Group without group head: No dedicated group head or controlling function is assigned. This type of group is referred to as decentralized / distributed group, Fig. 5c. Here, all transceivers are marked by the reference numeral 12 GM.

Below, the centralized approach (not claimed) for resource allocation will be described in detail. According to embodiments, the sidelink resources (with dedicated resources in BWPs or Sidelink resource pools) are distributed to the group head (GH) and (if possible) to the group members (GMs). GMs will monitor the resources as RX pools. If no grants are received from the network, only pre-configured resources are monitored by GM and used by GH to transmit control information to all GM. Via SL control information, the GH distributes the resources evenly (fairly/equally divided) or oddly (biased to the QoS of each GM) among the UEs GMs. The GH distribute the resources among members using their internal group-member IDs or the group cast ID. Distribution can be done in a unicast fashion for every GM (either via L1 SCI/PSCCH or in Data control messages, i.e., including RRC message encapsulated in PDCP packets).

Distribution can be done in a group cast fashion, i.e., using a group common control messages (either via L1 group common SCI/PSCCH or group-common in Data control messages, i.e., including RRC message encapsulated in PDCP packets). The GH sends a special sidelink-control information (e.g., SCI-0) field to all GM with dedicated grants. The special SCI may refer to grants for one or more GM in the same resource pool or across another resource pool (in the same BWP or different BWP). SL SCI may also be replaced by in data control. The in data control messages may include, e.g.,: including RRC message encapsulated in PDCP packets; this could be SCI RRC messages, this could be an RRC message establishing between two UE. E.g., this could be the PC5-S / RRC messages

The SL messages for requesting grants may be formulated as follows:
- multiplexed data and control.
- The SL messages for requesting grants shall be formulated as:
   - Scheduling Request (SR),
   - buffer-status report (BSR) with/without a scheduling request,
   - a request-to-send (RTS), or
   - any grant request message.

Similar to above, the control between the UEs (from the GM to GH) can be as a kind L1 signaling, e.g., SCI signaling, or in data control, e.g., a kind of SL RRC that could be in the form of PC-S.

Alternatively, the SL message for granting resources shall be formulated as: grant-response (GR), clear-to-send, or SCI with valid granting space. Periodic measurement reports are transmitted from the GMs (with their sensing results if available) to the GH. Messages are combined with the UE member group ID and the priority class (5QI or the QoS identifier value)

Note, the special control information might be sent in a data packet. This means that the control is over PDCP, e.g., this means that this could be a kind of sidelink (PC5) RRC.

The below discussion will describe an embodiment for the centralized method. The method may be split into two main cases (pre-configured resources from the GH) without activation/deactivation/scheduling requests (i.e., autonomous mode) and GM assisted resource configuration with scheduling (SR/VSR/RTSR) response (CTS) and activation/deactivation signaling by GH.

Regarding the usage of preconfigured resources the following approach can be used according to one embodiment.

In this case, the GH uses a simple mechanism to distribute the resources (in time division multiplexing (TDM) fashion or frequency division multiplexing (FDM) fashion). However, for better controlling the SL half-duplex problem, the GH may restrict the division to TDM.

In both cases, in coverage (with network RRC configured or granted resources, i.e., mainly periodic with semi-persistence scheduling (SPS) or configured resources in time and frequency) and in out of coverage (with sensing mechanism accomplished by the GH alone or assisted by the group members (GMs) sensing reports on dedicated carriers or long-term pre-configured resources), the GH compile a list of possible grants that shall be available for the group communication (whether unicast or groupcast) within the group.

In this method, the GH can allocate the resources to each GM (using its unique group member ID of the UE unique network id (if available)). The GH only sends SCI information or in data control message (including SL RRC/PC5-S) with dedicated grants for the GMs. GMs are only receives the SCI and decode the grant positions. It is not required in the first case that the GH receives grant requests or RTS from GMs.

The allocation criteria can be either:
- Equal resource split, in time and frequency, among all group members:
   ∘ For periodic resources, the GH splits the available SPS or configured periodic grant period equally among all UE GMs. E.g., if the GH has an access to a resource pool grants with a number of N physical resource blocks (PRBs) in frequency and a period P in total time T, then each group member gets a frequency band N PRBs and periodic grant per member P_m = P*K, where K is the number of UEs in the group.
   ∘ A periodic resources in this case is not realizable
- QoS Biased resource split, in time and frequency, for specific group members:
   ∘ For periodic resources, the GH splits the available SPS or configured periodic grant period among the UE GMs differently among UEs based on their QoS identifier value if initially known during the group formation.
   ∘ For aperiodic resources, the GH may allocate one or more resources (in time or frequency) for high QoS users. Hence, I high quality UE may get more resources in frequency and/or several (consecutive (burst) / non-continuous (non-burst) transmission time.

Note: This QoS values ARE conveyed from GM to GH, possibly via control information in SCI or SL RRC (PC5-S).

Regarding the GM assisted resource configurations: as described above, the group member GM assisted resources configurations may be via SEI or PC5RRC. The resources could be associated based on the group idea. Here, information feels to be transmitted in the resource pool include:
- UE group member unique ID, e.g., xyz02 or xyz03
- status information (e.g. active, idle, etc.)
- 5QI values
- requesting resources field (e.g., BSR, SR, RTS)

On reception of an RTS from any group member and resources are available at the GH, it responds in the consequent time slot with consecutive periodic resources or one-short transmission. For granting the GMs, the GH sends the following information in the scheduling response:
- SCI with possible CTS,
- UE specific grants, and or
- Activation/deactivation timers if possible

The allocation criteria can be either equally distributed or biased to the 5QI values as stated above exactly

Below, the centralized system will be described. Here, different allocation techniques can be used according to different embodiments. According to an embodiment, the base station assisted allocation mode can be used.

In this case, also refers to mode 1, a gNB is responsible for allocating or pre configuring the resource grants either:
- Dynamic resources (i.e., based on the GH requests to the gNB)
- SPS periodic allocation
- Pre-configured resources or grant-free resources. In the case of Grant Free Transmission, the configured resources might be shared by other UE-group.

Once the GH receives the resource configuration from the gNB, it will start distributing them as described above.

Once the GH receives the dynamic grants from the gNB, it will start allocating these dynamic grants as described above

According to another embodiment, a so-called autonomous resource allocation can be used.

The resources might be on a dedicated carriers or long-term preconfigured grants or within one of the declared resource pools. One example to consider for autonomous allocation, is to consider: a time/frequency resource patterns (TFRP) as an example. This includes multiple patterns that splits the frequency resources and time resources as groups. The UE may select out from these resources for, at least, periodic data traffic. Where the UE (GH/GM) may:
- perform a random selection on the TFRP patterns
- perform sensing on more than a pattern to select the suitable one

To minimize interference between UE-groups, a distributed sensing approach shall be considered. In this case the GH might request the sensing reports on the available preconfigured grants from one or more GM. The common sensing approach works as:
- Plurality of GMs Send their sensing results to the GH
- GM obeys the final GH selected resources (consider the 20% or x% present)

Regarding the resource allocation /Resource allocation period it should be noted that according to embodiments the transmission period of the scheduled resources by the GM depends on:
- Selected periods (by the GH) sent to the GMs in the special SCI
- Selected periods dedicated by the gNB/RRC or until the end of the gNB/RRC initially scheduled resources
- Based on Hand shaking mechanism of request to send (RTS) and a clear to send (CTS)

Below, the distributed/decentralized load will be discussed with regard to optional features. There are variations of resource allocation techniques for the distributed/decentralized mode.

A distributed approach refers to the variant without group head. Each group member is responsible by itself to allocate resources, respecting the resource allocation need of all other group members.

One variant for distributed resource allocation would be the WLAN / sensing based resource allocation, which is seen as SoTa. However, a sensing based resource allocation is not optimized for spontaneous data transmission demanding low latency, which is expected by multiple use cases, e.g. platooning.

A group specific (sub-)-Resource-Pool or (sub-)BWP is expected to be initially allocated to the entire group. Once a groupcast group (e.g. a platoon) is setup,
- either the group specific BWP (=(sub-)-R-Pool or (sub-)BWP) are preconfigured (i.e. resource information received by GMs during the group setup procedure)
- or is sent / updated to all group members using consecutive groupcast control messages.

The assignment of the pre-defined GM specific BWP part is pre-defined and determined during the setup of the group.

According to an embodiment, the basic variant comprises the following steps:
Divide the allocated group resource by the number of group members. Each of the resource parts is allocated to the group member in relation to its group internal ID.

Only basic / small (possibly pre-defined) messages can be exchanged between the group members.

According to a further embodiment, an enhanced method can be used.

The major idea of this approach is that a (sub-)-R-pool (or sub-BWP) is allocated to each group, i.e. group sub-R-pool. Each group sub-R-pool is split into a control part and a data part. Each group member (GM) reports periodically its status and optionally its demand for resources in the defined control sub-R-pool of its group specific R-pool including time/frequency resources. This control pool could be also in a sub-BWP of its group BWP (BandWidth Part). All other GM listen continuously to the defined control resources of all group members. A group specific data BWP is available for all GMs (including the group specific resources or the group mini-resource-pool or the group R-Pool or the group sub-BWP). The use of the group specific BWP is determined on the preceding resource allocation control mechanism between all GMs using the control sub-BWPs.

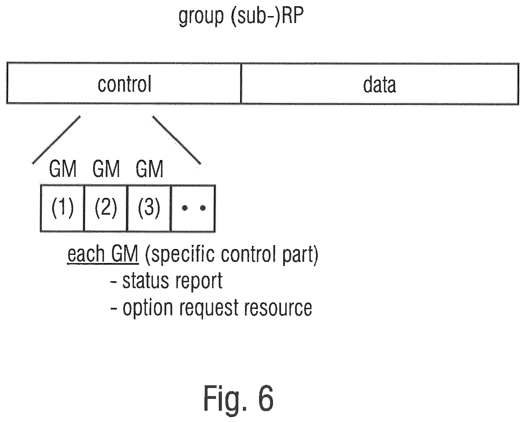

This enhanced method is illustrated by Fig. 6. Fig. 6 shows the structure of the data portions to be transmitted within this mode for the group (sub-) resource pool. As can be seen, each data portion can consist out of a control portion and a data portion. The control portion can comprise a plurality of control parts (cf. GM1, GM2 and GM3), wherein for each group member a specific control part can be included. This control part can comprise a status report. Also, it can optionally be transmitted within this control part of the resource request.

The control channel resources (existing in the Sub-R-pool) can be seen as a search space for the group. In order to define this search space for the group-specific control sub-Resource pool, a configuration or a pre-configuration dedicate part of the group-specific R-pool or the group specific BWP (=(sub-)-Resource-Pool or (sub-)BWP) to be used for control, e.g., some identified Time/Frequency resources, which could be, e.g., sub-R-Pool.
- The control time/frequency resources or the control sub-BWP of its group BWP is assigned to each GM (e.g. during the group setup). The control sub-R-Pool is maintained and used to exchange control information between all GMs.
- The resource assignment for control message exchange in the control sub-R-Pool
   can follow these two options:

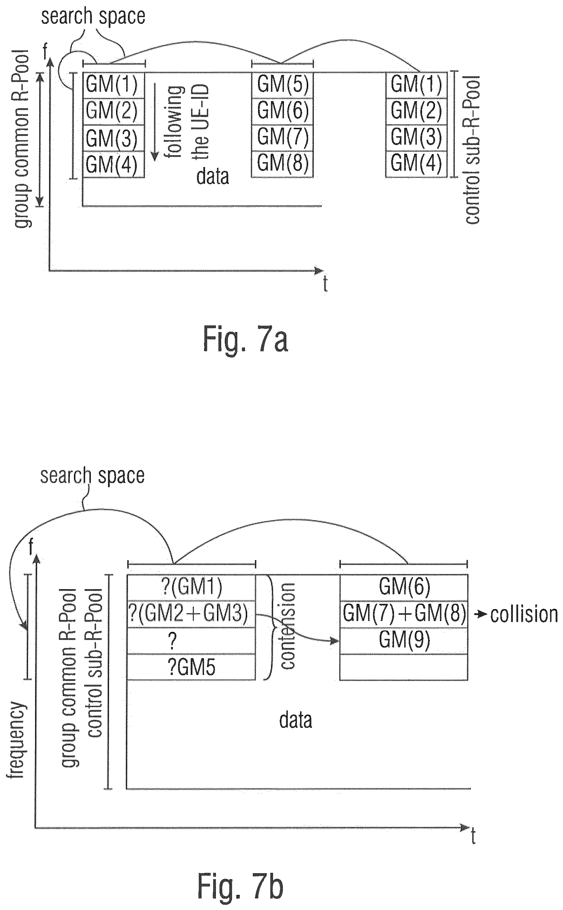

According to a first approach, the following steps can be performed:
- The assignment of the control resources time/frequency is following, e.g., the group internal members ID (e.g. GM with lowest ID uses the 1st. part of the control resources, GM with 2nd lowest ID used the 2nd control resource part of the control sub-R-Pool, etc.).
- The assignment of the control resources can then follow, e.g., a Round Robin scheduling
- A synchronization between the devices may take place before group communication coordination starts
- Fig. 7 depicts a group-common resources (group mini resource pool) with an identified control sub-resource pool resources (in time and frequency). The control channel resources may split among users, where each user may have (e.g., periodically) a control channel transmission occasion. This control channel may be used for coordinating group communication of communication within the group.
- The group sub-R-pool control may have periodic or aperiodic resources
- The control resources for the sub-R-pool and the sub-R-pool may be conveyed to the GM as a kind of search space
- The control resources for the sub-R-pool and the sub-R-pool may be preconfigured to the GM as a kind of search space
- In another embodiment, the GM may exchange upper layer messages (e.g., RRC over PC5 or PC5-S) exchanging the control message Sub-R-pool and the resources search space.

According to a further option, the following steps can be used:
Similar to the previous option, the search space for a group sub-R-pool for control time/frequency resources may be configured or preconfigured. However, the assignment of resources might not consider a GM ID allocation. This could be viable for group with a high number of group members and less sub-R-pool control resources. This could be viable also if the group control messages is not periodic. In this case, random access may be consider where one or more GM control messages may colloid (see Figure 7). In this case, e.g.,
- a redundant control transmission may be considered.
- a code multiplexed control format may be used.

Regarding the information fields to be transmitted in the resource part, it should be noted that same can include (at least one):
- status information (e.g. active, idle, etc.)
- control field for resource allocation:
   - to request resources (e.g. similar to RTS/ or SR)
   - to indicate the acceptance / rejection of the resource request of other GMs

Each GM listens continuously to the control sub-BWPs of all GMs. On reception of an RTS of a GM, each GM responds in the constitutive group-specific control sub-BWP. For example, if the group member accepts the request, i.e., the group member does not use the group specific data BWP itself or has not sent an RTS itself in the preceding control sub-BWP and assumes higher priority than the other resources requesting GMs (see below). This GM reports in its control field of its control sub-BWP regarding the group internal ID of the RTS requesting GM. Optionally, it can add an indication to allow work at EGCTS (or to request transmission). Note, if only the group internal ID of the group member is transmitted, it can be interpreted as CTS.

In case the RTS of one GM is not accepted by all other GMs, this GM repeats the RTS in (one of) the consecutive control sub-BWP. If two GMs demand resources at the same time, the GM allocating the next group specific data BWP is selected based on either its group internal ID: i.e. either the UE with lower or higher group internal ID is allowed to send first or an additional priority field (indicating the priority of the data to be transmitted, e.g. QoS indication): the UE with higher priority transmits first. In case of identical priority, the group internal ID rule described may apply.

If the UE ID/GM-ID will be used for defining the control resource assignment in the group control search space, it is crucial to define the group member IDs. One possible is that once a group is initiated, upper layer selects the IDs for every GM-UE and the possible group ID.

According to an embodiment, resource allocation for a group handover can be performed. Here, the below method can be used: The GH considers all the requested access to perform a complete (successful) handover. During the handover process, the GH can either
∘ Allocate resources for the GMs on previously allocated resource pools (last configured by RRC or activated by the S-gNB); this is make-before-brake (send before disconnecting) mechanism
∘ Allocate autonomous resources in dedicated carriers or RRC preconfigured common resource pool or exceptional pool until HO is completed.
∘ Allocate resources based on emergency resource pool/exceptional pool with lower power values
∘ Switch to Unlic. Bands during handover, yet distribute the resources accordingly.
∘ Switch to mmWave (high frequency) resources with low power transmission.

After the HO is completes, the GH distribute the resources according to the new gNB resource scheduling or resumed/new RRC configurations.

An example of a group handover can be a platoon moving across two or more cells. Hence, there might be instances when a handover is used. It is necessary that the serving gNB (S-gNB) can prepare an optimized measurement report for the most likely candidate target gNB (T-gNB). If all the platoon members are sending their measurement to the S-gNB, it will increase an additional overhead. Hence, the collective measurement reports of the platoon members sent only by the platoon head to the gNB. This implies for the platoon:
- a GROUP HANDOVER REQUEST, and
- a GROUP HANDOVER REQUEST ACKNOWLEDGE messages

Once the group handover is successful, the resources should be allocated by the T-gNB to the GH. Thereafter, the GH can distribute it to all group members as described before.

Below, the radio resource control (RRC) SL messages will be described with its optional features.

As proposed in the previous embodiment, a GH UE is capable of allocating resources to other GM UEs based on their demands for resources or the role of the GH to distribute resources. For example, in the case of groupcast communications, the group leader/group head/group manager UE (i.e., UE assisting the resource scheduling) is able to select resources for the group members as described in previous embodiment.

Group Member UEs requiring resources send a request to the group leader UE, similar to that of a scheduling request (SR). The group leader uses this information to assist in allocation of resources for the member UEs and send back control information with possible free resources. Hence, the resource announcements, which a group leader UE provides, can be a kind of grant response (GR) message.

As described before, those control messages can be conveyed via SCI (L1-Signaling) or in Data Signaling. One important in data signaling can be SL RRC signaling, i.e., sent via SL RRC messages.

In this section, we summarize our design for our embodiments considering RRC configurations for setting/establishing/configuring the PC5 interfaces over sidelinks.

The first shall be the configuration in a unicast manner. The second is the configuration for group casting manner. The third is for partial coverage scenarios. The fourth (and the final) is for group casting scenario with a group leader.

As already indicated, the control message can be transmitted using unicast (RRC configuration over PC5/sidelink), group cast (RRC configuration over PC5 sidelink) or over group-common resource pool (RRC configuration over sidelink).

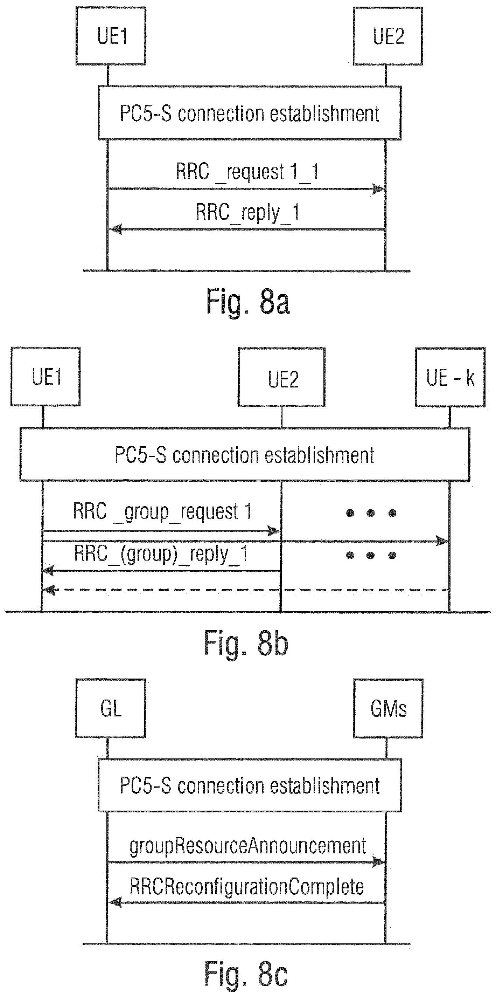

Regarding the unicast approach which is illustrated by Fig. 8a, here two UEs, UE1 and UE2 exchange information (RRC underline request 1 and RRC underline reply) in order to perform the resource management.

In this scheme, it is assumed that two UEs are establishing PC5-Sidelink connections on the physical layer (i.e., after discovering and a successful pairing mechanism). It could be possible that the two UEs are in the vicinity of each other (as far as an X meters) and possible are able to start a unicast session. It could be also assumed that the two UEs had a former (established) sidelink communication, which was/is visible to the two UEs upper layers.

Once one or more of the above conditions are met, one UE is assumed to initiate an RRC configuration message to the other UE (say UE1 initiate a message and a control to configure UE2 via RRC_Request_1). Once this request/initialization/configuration message is sent a UE, the target UE (UE2 in this case) shall send (if configured to do so) a feedback reply to the RRC level, i.e., RRC_Reply_1. See Figure 1 for more details.

Below, some examples for the content of the RRC request 1 are given. It is noted that the RRC request may comprise at least one of the below information.
- SL_RRC_resource_configuration:ldentifying time/freq resources. This may include dynamic grants or configured grants (e.g., similar to type 1 configured grants).
- SL_RRC_Slot_Configuration: Identify the number of symbols for TX and number of symbols for RX/PSFCH (i.e., feedback)
- SL_RRC_Feedback_Configuration: configure which feedback information (if any is needed) to be included in the Sidelink Feedback Channel (SCI): e.g., HARQ, CSI, power-control feedback parameters

Below an example for the content of the RRC reply (if it exists a reply is configured to be on) is given. The reply may comprise at least one of the following information:
- Accept
- Reject
- SL RRC reconfiguration request

Fig. 8b shows the group cast approach. Here, at least three UEs (UE1, UE2 and UEK) are illustrated, which exchange information (RRC group requests and RRC group reply) between each other.

For multicast case, a UE (say UE1) shall start to configure other UEs (say UE2, UE3, ..., UE-k). Once the UEs are involved in an active groupcast session or the UEs would be involved in a groupcast session, a leader of the groupcast or an initiator of the groupcast shall configure the other UEs based on the situation as follows:
- Group-cast/group Resource configuration (SL_RRC_group_resource_configuration)
- Group RRC Slot format configurations (SFC): SL_RRC_Group_Slot_Configuration
- Group feedback dedicated configurations SL_RRC_Gorup_Feedback_Configuration

The information in the fields (SL_RRC_group_resource_configuration/ SL_RRC_Group_Slot_Configuration/ SL_RRC_Gorup_Feedback_Configuration) is similar to the unicast described above.

The RRC group reply message may be similar or comparable to the RRC reply 1 as discussed in the context of the unicast approach.

Fig. 8c illustrates a group-common resource pool RRC configuration over a sidelink. Here, a communication (group resource announcement and RRC reconfiguration complete) between the group leader (GL) and one or more group members (GMs) is illustrated.

As described in previous embodiment, a GL/GH may configure only a group common resource pool/mini-resource pool for conducting group communication. In one of the previous embodiment, the common resource configuration is to be sent via L1 signaling (e.g., SCI) or RRC signaling. This group common resource pool can be used for group communication. Additional resource selection and sensing from the group happens in this group dedicated resources.

In this case, a group common RRC which is group-casted to all UEs/GMs within the group (e.g., with a given ID), e.g., in a SIB like casting but only for a group of UEs. This Sidelink RRC message includes:
- The resource pool(s) for group communication or the mini-resource pool for group communication. This can be mainly time-frequency resources of the group common pool/resources.
- (Optionally): the group common BWP if more than a BWP are configured.

According to a further embodiment, the method for centralized managing cycling resources can comprise just one step of exchanging resource control information between the first and the second mobile transceiver including a sensing report. Here, the second mobile transceiver performs sensing and provides a corresponding sensory brought to the first mobile transceiver. Alternatively, the first mobile transceiver accomplished resource allocation using the sensing results of at least the second mobile transceiver. In combination, this means that the second mobile transceiver performs a sensing and provides a corresponding sensing report to the first mobile transceiver (e.g., using dedicated carriers or preconfigured resources) so that the first transceiver can accomplish the resource allocation.

Above, embodiments of the present application have been discussed in context of a method or method steps which are performed within a communication network or especially within a communication group. It should be noted that further embodiments refer to the communication system (comprising the entities of the communication network or the communication group) or to one or more of the entities of the communication system/communication group, e.g., two UEs or in general transceiver, e.g., transceiver belonging to a UE or vehicle. In general, the application is applicable V2X, D2D, mMTC, URLLC, critical communication.

High traffic scenario for V2X, with some / few / single UEs transmitting on the same/multiple pools. The RX UE can have one or more RF chains.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver .

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### References

[1] TS36.213 Evolved Universal Terrestrial Radio Access (E-UTRA); Physical layer procedures; V14.5.0
[2] TS 36.331 Evolved Universal Terrestrial Radio Access (E-UTRA) - Radio Resource Control (RRC); V14.
[3] 3GPP TS 36.211 Evolved Universal Terrestrial Radio Access (E-UTRA); Physical Channels and Modulation, v 14.3.0
[4] 3GPP TS 36.212 Evolved Universal Terrestrial Radio Access (E-UTRA); Multiplexing and channel coding, v 14.3.0
[5] 3GPP TS 36.321 Evolved Universal Terrestrial Radio Access (E-UTRA); Medium Access Control (MAC) protocol specification, v 14.3.0
[6] 2017P59629 EP: Emergency Notification (URLLC) Requesting Spontaneous Grant Free Transmission for V2X
[7] TS 36.521 User Equipment (UE) conformance specification; Radio transmission and reception; Part 1: Conformance testing Rel 15.

### Abbreviation

| Abbreviation | Meaning |
|---|---|
| BS | Base Station |
| CBR | Channel Busy Ratio |
| D2D | Device-to-Device |
| EN | Emergency Notification |
| eNB | Evolved Node B (base station) |
| FDM | Frequency Division Multiplexing |
| GH | Group head |
| GM | Group Member |
| LTE | Long-Term Evolution |
| PC5 | Interface using the Sidelink Channel for D2D communication |
| PPPP | ProSe per packet priority |
| PRB | Physical Resource Block |
| ProSe | Proximity Services |
| RA | Resource Allocation |
| SCI | Sidelink Control Information |
| SL | sidelink |
| sTTI | Short Transmission Time Interval |
| TDM | Time Division Multiplexing |
| TDMA | Time Division Multiple Access |
| TPC | Transmit power control/transmit power command |
| UE | User Entity (User Terminal) |
| URLLC | Ultra-Reliable Low-Latency Communication |
| V2V | Vehicle-to-vehicle |
| V2I | Vehicle-to-infrastructure |
| V2P | Vehicle-to-pedestrian |
| V2N | Vehicle-to-network |
| V2X | Vehicle-to-everything, i.e., V2V, V2I, V2P, V2N |

## Claims

1. A method for decentralized managing sidelink (12sl) resources within a communication group (10), wherein the communication group (10) comprises a first mobile transceiver as group member (12gm1, 12gm2) and a second mobile transceiver as group member (12gm1, 12gm2), wherein the method comprises:
exchanging resource controlling information between the first and the second mobile transceiver, wherein the resource control information comprises at least an information regarding a timeslot and/or frequency slot of the resources;
wherein each group member (12gm1, 12gm2) exchanges resource control information reporting on a resource demand.

2. The method according to claim 1, wherein the step of exchanging is performed using a dedicated resource portion of the resources or a preconfigured or preassigned dedicated resource portion of the resources and/or wherein each resource control information comprises an information regarding a group ID assigned to the communication group (10); and/or
wherein exchanging resource control information is performed using unicast, groupcast and/or broadcast.

3. The method according to claim 1 or 2, wherein the first mobile transceiver does not accept the request, so that the further mobile transceiver can repeat the request within this communication group (10) or another communication group (10); and/or wherein the first mobile transceiver performs a prioritization between different simultaneously transmitted requests of different further mobile transceivers based on an priority, based on an ID of the further mobile transceivers and/or based on a QoS information.

4. The method according to one of the claims 1 to 3, wherein the second mobile transceiver performs sensing and provides the outcome of the corresponding sensing to the first mobile transceiver; and/or
wherein the first mobile transceiver accomplished resource allocation using the outcome of the sensing report of at least the second mobile transceiver; and/or wherein the second mobile transceiver performs sensing and provides a corresponding sensing report to the first mobile transceiver using dedicated carriers or preconfigured resources.

5. The method according to one of the claims 1 to 4, wherein no dedicated group head or controlling function is assigned.

6. A first mobile transceiver configured for decentralized managing sidelink (12sl) resources within a communication group (10), the communication group (10) comprises the first mobile transceiver as group member (12gm1, 12gm2) and a second mobile transceiver as group member (12gm1, 12gm2), wherein the first mobile transceiver is configured for
exchanging resource controlling information between the first and the second mobile transceiver, wherein the resource control information comprises at least an information regarding a timeslot and/or frequency slot of the resources;
wherein each group member (12gm1, 12gm2) exchanges resource control information reporting on a resource demand.

7. A communication group (10), wherein the communication group (10) comprises the first mobile transceiver of claim 6 as group member (12gm1, 12gm2) and a second mobile transceiver as group member (12gm1, 12gm2), wherein the communication group (10) performs the sidelink (12sl) resource managing based on the method according to one of claims 1 to 5 for decentralized managing the sidelink (12sl) resources.

8. A computer program for causing the first mobile transceiver to perform, when running on a computer, the method according to one of claims 1 to 5.

## Patentansprüche

1. Ein Verfahren zum dezentralisierten Verwalten von Sidelink (12sl)-Ressourcen innerhalb einer Kommunikationsgruppe (10), wobei die Kommunikationsgruppe (10) ein erstes mobiles Sende/Empfangsgerät als Gruppenmitglied (12gm1, 12gm2) und ein zweites mobile Sende/Empfangsgerät als Gruppenmitglied (12gm1, 12gm2) aufweist, wobei das Verfahren folgenden Schritt aufweist:
Austauschen von Ressourcensteuerungsinformationen zwischen dem ersten und dem zweiten mobilen Sende/Empfangsgerät, wobei die Ressourcensteuerungsinformation zumindest eine Information hinsichtlich eines Zeitschlitzes und/oder Frequenzschlitzes der Ressourcen aufweist;
wobei jedes Gruppenmitglied (12gm1, 12gm2) Ressourcensteuerungsinformationen austauscht, die über einen Ressourcenbedarf berichten.

2. Das Verfahren gemäß Anspruch 1, wobei der Schritt des Austauschens unter Verwendung eines zweckgebundenen Ressourcenteils der Ressourcen oder eines vorkonfigurierten oder vorab zugewiesenen zweckgebundenen Ressourcenteils der Ressourcen durchgeführt wird und/oder wobei jede Ressourcensteuerungsinformation eine Information hinsichtlich einer Gruppen-ID aufweist, die der Kommunikationsgruppe (10) zugewiesen ist; und/oder
wobei das Austauschen von Ressourcensteuerungsinformation unter Verwendung von Unicast, Groupcast und/oder Broadcast durchgeführt wird.

3. Das Verfahren gemäß Anspruch 1 oder 2, wobei das erste mobile Sende/Empfangsgerät die Anforderung nicht akzeptiert, so dass das weitere mobile Sende/Empfangsgerät die Anforderung innerhalb dieser Kommunikationsgruppe (10) oder einer anderen Kommunikationsgruppe (10) wiederholen kann; und/oder
wobei das erste mobile Sende/Empfangsgerät eine Priorisierung zwischen unterschiedlichen gleichzeitig übertragenen Anforderungen unterschiedlicher weiterer mobiler Sende/Empfangsgeräte basierend auf einer Priorität, basierend auf einer ID der weiteren mobilen Sende/Empfangsgeräte und/oder basierend auf einer QoS-Information durchführt.

4. Das Verfahren gemäß einem der Ansprüche 1 bis 3, wobei das zweite mobile Sende/Empfangsgerät eine Erfassung durchführt und das Ergebnis der entsprechenden Erfassung dem ersten mobilen Sende/Empfangsgerät bereitstellt; und/oder
wobei das erste mobile Sende/Empfangsgerät eine Ressourcenzuordnung unter Verwendung des Ergebnisses des Erfassungsberichts von zumindest dem zweiten mobilen Sende/Empfangsgerät erreicht; und/oder
wobei das zweite mobile Sende/Empfangsgerät eine Erfassung durchführt und dem ersten mobilen Sende/Empfangsgerät unter Verwendung zweckgebundener Träger oder vorkonfigurierter Ressourcen einen entsprechenden Erfassungsbericht bereitstellt.

5. Das Verfahren gemäß einem der Ansprüche 1 bis 4, wobei kein zweckgebundener Gruppenkopf oder keine zweckgebundene Steuerungsfunktion zugewiesen ist.

6. Ein erstes mobiles Sende/Empfangsgerät, das zum dezentralisierten Verwalten von Sidelink (12sl)-Ressourcen innerhalb einer Kommunikationsgruppe (10) konfiguriert ist, wobei die Kommunikationsgruppe (10) das erste mobile Sende/Empfangsgerät als Gruppenmitglied (12gm1, 12gm2) und ein zweites mobiles Sende/Empfangsgerät als Gruppenmitglied (12gm1, 12gm2) aufweist, wobei das erste mobile Sende/Empfangsgerät konfiguriert ist zum
Austauschen von Ressourcensteuerungsinformationen zwischen dem ersten und dem zweiten mobilen Sende/Empfangsgerät, wobei die Ressourcensteuerungsinformationen zumindest eine Information hinsichtlich eines Zeitschlitzes und/oder Frequenzschlitzes der Ressourcen aufweisen;
wobei jedes Gruppenmitglied (12gm1, 12gm2) Ressourcensteuerungsinformationen austauscht, die über einen Ressourcenbedarf berichten.

7. Eine Kommunikationsgruppe (10),
wobei die Kommunikationsgruppe (10) das erste mobile Sende/Empfangsgerät gemäß Anspruch 6 als Gruppenmitglied (12gm1, 12gm2) und ein zweites mobiles Sende/Empfangsgerät als Gruppenmitglied (12gm1, 12gm2) aufweist, wobei die Kommunikationsgruppe (10) das Verwalten von Sidelink (12sl)-Ressourcen basierend auf dem Verfahren gemäß einem der Ansprüche 1 bis 5 zum dezentralisierten Verwalten der Sidelink (12sl)-Ressourcen durchführt.

8. Ein Computerprogramm zum Bewirken, dass das erste mobile Sende/Empfangsgerät, wenn dasselbe auf einem Computer läuft, das Verfahren gemäß einem der Ansprüche 1 bis 5 durchführt.

## Revendications

1. Procédé de gestion décentralisée de ressources de liaison latérale (12sl) dans un groupe de communication (10), dans lequel le groupe de communication (10) comprend un premier émetteur-récepteur mobile en tant que membre de groupe (12gm1, 12gm2) et un deuxième émetteur-récepteur mobile en tant que membre de groupe (12gm1, 12gm2), dans lequel le procédé comprend le fait de :
échanger des informations de contrôle de ressources entre le premier et le deuxième émetteur-récepteur mobile, dans lequel les informations de contrôle de ressources comprennent au moins une information relative à un créneau temporel et/ou à un créneau de fréquence des ressources ;
dans lequel chaque membre de groupe (12gm1, 12gm2) échange des informations de contrôle de ressources rendant compte d'une demande de ressources.

2. Procédé selon la revendication 1, dans lequel l'étape d'échange est réalisée en utilisant une partie de ressources dédiées ou une partie de ressources dédiées préconfigurée ou préattribuée des ressources, et/ou dans lequel chaque information de contrôle de ressources comprend une information relative à un identifiant de groupe attribué au groupe de communication (10) ; et/ou
dans lequel l'échange d'informations de contrôle de ressources est réalisé en diffusion individuelle, en diffusion de groupe et/ou en diffusion.

3. Procédé selon la revendication 1 ou 2, dans lequel le premier émetteur-récepteur mobile n'accepte pas la requête, de sorte que l'autre émetteur-récepteur mobile puisse réitérer la requête dans le groupe de communication (10) ou dans un autre groupe de communication (10) ; et/ou
dans lequel le premier émetteur-récepteur mobile réalise une priorisation entre différentes requêtes transmises simultanément par d'autres émetteurs-récepteurs mobiles différents sur la base d'une priorité, sur la base d'un identifiant des autres émetteurs-récepteurs mobiles et/ou sur la base d'une information de qualité de service, QoS.

4. Procédé selon l'une des revendications 1 à 3, dans lequel le deuxième émetteur-récepteur mobile réalise une détection et fournit le résultat de la détection correspondante au premier émetteur-récepteur mobile ; et/ou
dans lequel l'allocation de ressources est accomplie par un premier émetteur-récepteur mobile en utilisant le résultat du rapport de détection d'au moins le deuxième émetteur-récepteur mobile ; et/ou dans lequel le deuxième émetteur-récepteur mobile réalise une détection et fournit un rapport de détection correspondant au premier émetteur-récepteur mobile en utilisant des porteuses dédiées ou des ressources préconfigurées.

5. Procédé selon l'une des revendications 1 à 4, dans lequel aucune tête de groupe dédiée ou aucune fonction de contrôle n'est attribuée.

6. Un premier émetteur-récepteur mobile configuré pour la gestion décentralisée de ressources de liaison latérale (12sl) dans un groupe de communication (10), le groupe de communication (10) comprenant le premier émetteur-récepteur mobile en tant que membre de groupe (12gm1, 12gm2) et un deuxième émetteur-récepteur mobile en tant que membre de groupe (12gm1, 12gm2), dans lequel le premier émetteur-récepteur mobile est configuré pour
échanger des informations de contrôle de ressources entre le premier et le deuxième émetteur-récepteur mobile, dans lequel les informations de contrôle de ressources comprennent au moins une information relative à un créneau temporel et/ou à un créneau de fréquence des ressources ;
dans lequel chaque membre de groupe (12gm1, 12gm2) échange des informations de contrôle de ressources rendant compte d'une demande de ressources.

7. Groupe de communication (10),
dans lequel le groupe de communication (10) comprend le premier émetteur-récepteur mobile selon la revendication 6 en tant que membre de groupe (12gm1, 12gm2) et un deuxième émetteur-récepteur mobile en tant que membre de groupe (12gm1, 12gm2), dans lequel le groupe de communication (10) réalise la gestion de ressources de liaison latérale (12sl) sur la base du procédé selon l'une des revendications 1 à 5 pour la gestion décentralisée des ressources de liaison latérale (12sl).

8. Programme informatique pour amener le premier émetteur-récepteur mobile à réaliser, lorsqu'il est exécuté sur un ordinateur, le procédé selon l'une des revendications 1 à 5.
